Europäisches Patentamt

European Patent Office

Office européen des brevets

(19)

(11) Veröffentlichungsnummer : **0 104 419**
**B1**

(12) # EUROPÄISCHE PATENTSCHRIFT

(45) Veröffentlichungstag der Patentschrift :
12.02.86

(21) Anmeldenummer : 83108239.1

(22) Anmeldetag : 22.08.83

(51) Int. Cl.⁴ : **G 03 B 42/04**

(54) **Vorrichtung zum Be- und Entladen von Röntgen-Filmkassetten.**

(30) Priorität : 30.08.82 DE 3232187

(43) Veröffentlichungstag der Anmeldung :
04.04.84 Patentblatt 84/14

(45) Bekanntmachung des Hinweises auf die Patenterteilung : 12.02.86 Patentblatt 86/07

(84) Benannte Vertragsstaaten :
FR GB IT

(56) Entgegenhaltungen :
EP-A- 0 048 382
EP-A- 0 052 159
DE-A- 2 607 876
DE-A- 3 000 760
US-A- 3 150 263

(73) Patentinhaber : **AGFA-GEVAERT Aktiengesellschaft**
**D-5090 Leverkusen 1 (DE)**

(72) Erfinder : **Hösel, Peter**
**Zasingerstrasse 6**
**D-8000 München 90 (DE)**
Erfinder : **Plaschke, Herbert**
**Graf-Törring-Strasse 12**
**D-8031 Gernlinden (DE)**

Jouve, 18, rue St-Denis, 75001 Paris, France

## Beschreibung

Die Erfindung betrifft eine Vorrichtung zum Be- und Entladen von Röntgenfilmkassetten, mit einem Schacht zur Aufnahme einer Kassette, Transportelementen zum Ein- und Ausfahren der Kassette, mit Mitteln zum lichtdichten Verschließen der Eingabeöffnung des Schachtes, einer Öffnungseinrichtung für die Kassette, Mitteln zur Filmentnahme aus der und zum Eingeben eines Filmes in die Kassette, und mit einer auch als Abtasteinrichtung für die Kassettenlänge dienenden transversalen Verschiebeeinrichtung zum Positionieren der Kassette und mit einer die Kassettenbreite abtastenden Abtasteinrichtung, durch die die Ist-Werte der Kassettenlänge und -breite feststellbar sind, wobei die mechanisch abtastenden Abtasteinrichtungen mit je einer Anzahl von elektrischen Schaltelementen zusammenwirken.

Aus der DE-B 26 07 876 ist eine Vorrichtung ähnlicher Art bekannt, bei der die Kassette in dem Eingabeschacht bis zu einem Anschlag gefahren wird un sodann quer zu dieser Einfahrrichtung eine Verschiebeeinrichtung die Kassette an einen zweiten, seitlichen Anschlag drückt. Damit ist die Kassette mit einer Ecke als Bezugspunkt festgelegt. An der Verschiebeeinrichtung sind Taster vorgesehen, welche an einer Seite der Kassette zum Anliegen kommen. Durch das Andrücken der Verschiebeeinrichtung an der Kassette werden diese Taster betätigt, d. h. die betätigten Taster geben eine Aussage über die Länge einer Kassettenseite.

Eine solche Längenabtastung ist jedoch absolut unzureichend, da damit das Format nur in einer Richtung erkannt werden kann. Außerdem würden die Taster eine um 90° verdreht eingegebene Kassette nicht erkennen.

Eine Vorrichtung der eingangs genannten Art ist bekanntgeworden durch die EP-A1-00 52 159 und die DE-A-30 00 760. Bei dieser bekannten Vorrichtung dienen die in beiden Koordinatenrichtungen der Film- bzw. Kassettenbreite und -länge vorgesehenen, als Mikroschalter ausgebildeten elektrischen Schaltelemente, die bei Abtastung der Länge und Breite einer eingegebenen Kassette betätigt werden, lediglich zur Feststellung des Formats des neu in eine eingegebene Kassette einzuführenden Filmblattes aus dem entsprechenden Vorratsmagazin.

Demgegenüber liegt der Erfindung die Aufgabe zugrunde, eine Vorrichtung der eingangs genannten Art derart zu verbessern, daß eine eingegebene Kassette nicht nur mit einem Filmblatt der entsprechenden Größe beladen wird, sondern daß Störungen bei Einbringung einer für die Bearbeitung in der Vorrichtung nicht geeigneten Kassette automatisch vermieden werden.

Diese Aufgabe wird durch die im Kennzeichen des Anspruchs 1 aufgeführten Mittel gelöst.

Mit der Erfindung wird eine sichere X- und Y-Erkennung der Kassettengröße erreicht, wobei eine um 90° verdrehte Kassette als falsche Kassettengröße erkannt und wieder ausgestoßen wird.

In einer Ausgestaltung der Erfindung wird zur Erkennung der richtigen Kassettenlage (Deckel nach oben) an der Verschiebeeinrichtung ein Fühler vorgesehen, der in eine nur einmal vorhandene, typische Kassettenausnehmung eingreift.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen :

Figur 1 eine perspektivische Ansicht, zum Teil im Schnitt, einer Kassetteneingabestation in einer Vorrichtung zum Be- und Entladen von Röntgen-Filmkassetten ;

Figur 2 eine schematische Ansicht aus anderer Richtung des in Fig. 1 dargestellten Eingabeschachtes mit den erfindungsgemäßen Fühlereinrichtungen in perspektivischer Darstellung ;

Figur 3 einen Querschnitt durch die Be- und Entladestation ;

Figur 4 ein Blockschaltbild mit den elektrischen Verknüpfungen der in den Fig. 1 bis 3 gezeigten Fühlerelemente ; und

Figur 5 eine schematische Ansicht einer anderen Ausführungsform der X- bzw. Y-Erkennung.

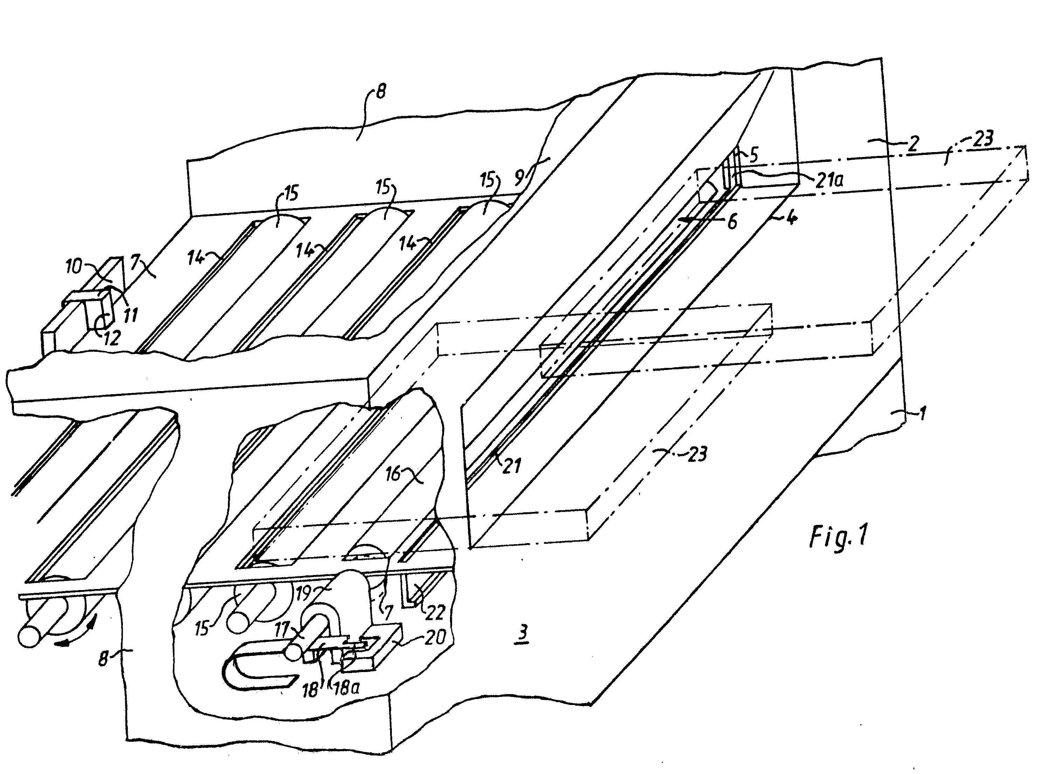

In Fig. 1 ist mit 1 eine Vorrichtung zum Be- und Entladen von Röntgenfilmkassetten bezeichnet, in welcher sich eine Kassettenstation 2 befindet. In einer Frontplatte 3 ist eine Aussparung 4 ausgeformt, von welcher aus Schrägflächen zu einer Eingabeöffnung 5 verlaufen, welche in der Höhe der dicksten und in der Breite dem größten Kassettenformat entspricht. Von der Eingabeöffnung 5 geht ein Schacht 6 aus, der im wesentlichen von einem Boden 7, Seitenwänden 8, einer Deckwand 9 gebildet und nach hinten offen ist. Die rückwärtige Seite des Schachtes 6 wird von einer Anschlagleiste 10 begrenzt, welche eine Ausnehmung 11 aufweist, durch die ein Mikroschalter 12 ragt.

Im Schachtboden 7 ist eine Vielzahl von Längsschlitzen ausgeformt, durch welche angetriebene Walzen 15 mit einigen Millimetern über das Bodenniveau ragen. Die Walzen 15 stehen mit einem nicht dargestellten Antrieb in Verbindung.

Zwischen Eingabeöffnung 5 und der ersten Transportwalze 15 ist in einem weiteren Schlitz 14 im Boden 7 eine Schaltwalze 16 angeordnet, deren beide Achszapfen 17 auf einem Federelement 18 ruhen und welche mittels eines Bügels 19 in allen Richtungen bis auf die auf das Federelement gerichtete fixiert sind. Das Federelement 18 weist die Form einer gebogenen Blattfeder auf und ist mit einem Ende an dem Schachtboden 7 angebracht und weist am anderen Ende eine Fahne 18a auf, welche im Ruhezustand oberhalb dem U-förmigen Einschnitt einer Lichtschranke 20 liegt. In gleicher Weise ist auch die andere Seite der Walze 16 auf einem Federelement 18 gelagert, das mit einer Lichtschranke 20 zusammenwirkt. Zwischen Schaltwalze 16 und Eingabeöffnung 5 ist ein weiterer Schlitz 21 in dem Schachtboden 7 ausgeformt, in welchem ein Schieber 22 versenkt ist, der in seitlichen Nuten 21a geführt ist und durch nicht dargestellte Mittel hinter die Eingabeöffnung 5 angehoben werden kann, wobei der Schieber die Eingabeöffnung 5 lichtdicht verschließt.

Aus Gründen der Übersichtlichkeit sind in Fig. 1 verschiedene Einrichtungen, wie Kassettenabtastung, Öffnungseinrichtung und die Mittel zum Entnehmen und Eingeben eines Filmes, welche sich ebenfalls in dem Schacht befinden, nicht dargestellt.

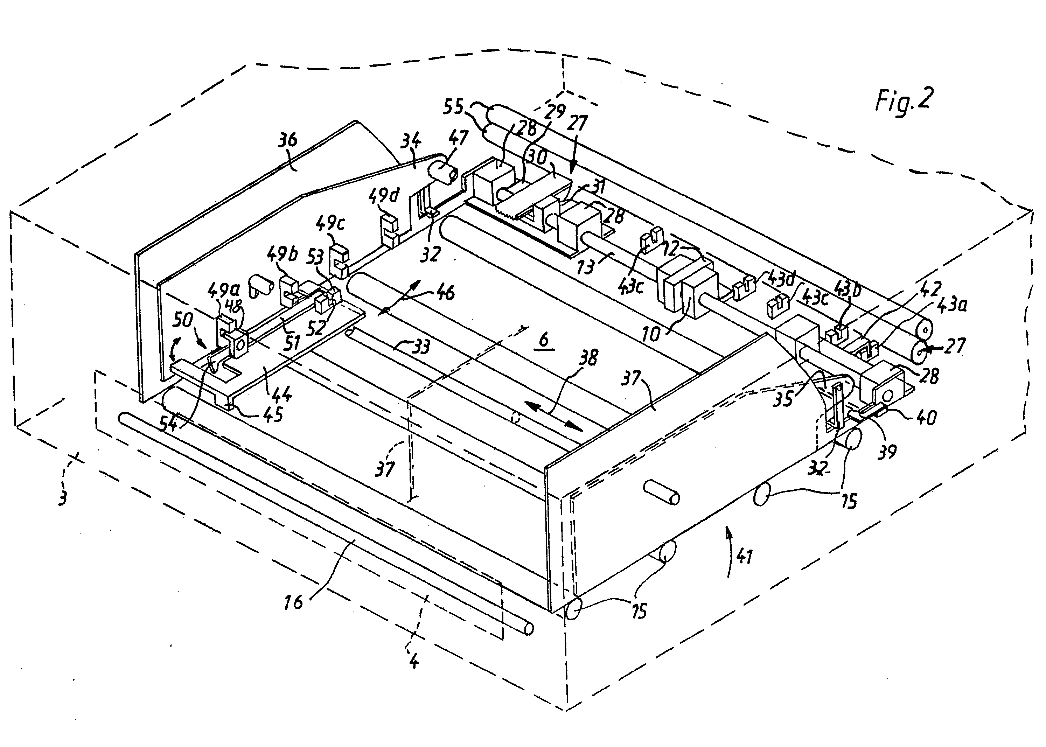

In Fig. 2 sind aus einer anderen Perspektive Elemente beschrieben, die im wesentlichen der Formaterkennung dienen. Teile, die bereits in Fig. 1 beschrieben sind, sind mit den gleichen Bezugszeichen andeutungsweise wiedergegeben. Teile, die in dem Schacht noch vorhanden sind, für die Erfindung jedoch keine Bedeutung haben, sind weggelassen.

An der dem Eingabeschacht 4 gegenüberliegenden Seite ist der bereits in Fig. 1 erwähnte Schalter 12 dargestellt, welcher auf einer Stange 13 angebracht ist. Auf dieser Stange 13 sind an den beiden Seiten Entriegelungseinrichtung 27 angeordnet, von denen nur einer komplett dargestellt ist. Die Entriegelungseinrichtung 27 weist zwei miteinander verbundene Klötze 28 auf, zwischen denen ein U-förmiges Lager 29 auf der Achse 13 verschiebbar angeordnet ist. Zwischen den Schenkeln des U-förmigen Lagers 29 ist eine Wippe 30 gelagert, die an der zur Kassette weisenden Seite unten eine Riffelung aufweist. Dergegenüber ist unterhalb der Wippe 30 ein verschiebbarer Keil im dem Klotz 28 angeordnet, der mit einer Schrägfläche der Wippe derart zusammenwirkt, daß die Wippe gegen eine nicht dargestellte Feder gegen den Uhrzeigersinn verschwenkt werden kann. Damit läßt sich die Riffelung der Wippe mit der Riffelung der Kassettenentriegelung in Eingriff bringen. Sobald dies geschehen ist, wird das Lager 29 auf der Achse 13 verschoben, womit die Kassette entriegelt ist.

Für das Öffnen bzw. Anheben des Deckels ist auf jeder Seite des Schachtes 6 ein Haken 32 vorgesehen, der jeweils in die entsprechende Ausnehmung an der Kassette unterhalb des Deckels eingreift. Der eine Haken 32 ist an einer Schwenkplatte 34 angebracht, die um eine parallel zur Schaltwalze 16 verlaufende Achse 33 verschwenkbar ist. Der gegenüberliegende Haken 32 ist an einer Verschiebeplatte 35 angebracht, die einerseits um die Achse 33 verschwenkbar und andererseits entlang den Walzen 15 in Richtung auf die Platte 34 verschiebbar ist. Die Verbindung zwischen Achse 33 und Platte 35 ist so ausgeführt, daß die Platte 35 auf der Achse 33 einerseits verschoben, bei einer Drehbewegung der Achse aber mit verschwenkt werden kann.

Außerhalb der beiden Schwenkplatten 34 und 35 sind Wandplatten 36 bzw. 37 angeordnet, welche mit den jeweiligen Entriegelungseinrichtungen 27 verbunden sind. Im übrigen ist die Achse 33 durch die Wandplatten 36 und 37 geführt. Außerdem sind die Wandplatten durch nicht dargestellte Mittel für die noch zu beschreibenden Bewegungen am Geräteboden geführt.

Die Wandplatte 37 steht mit der Verschiebeplatte 35 insofern in Verbindung, als daß sie beide zusammen entlang der Stange 13 verschoben werden können. Mit den Platten 35 und 37 wird auch die Entriegelungseinrichtung 27 in Pfeilrichtung 38 verschoben, womit den unterschiedlichen Abständen der Kassettenhandhaben Rechnung getragen wird.

An der Wandplatte 37 ist in einer Aussparung in der Nähe des Hakens 32 ein Taststift 39 angeordnet, der mit einem Mikroschalter 40 zusammenwirkt. Der Taststift 39 greift bei eingelegter Kassette in eine nur einmal an der Kassette vorhandene Ausnehmung ein und erkennt somit die richtige Lage bezüglich oben und unten und der Vorder- und Rückkante der Kassette.

Die erfindungsgemäße Formaterkennung erfolgt nun durch die im nachfolgenden beschriebenen Mittel. Die aus Verschiebeplatte 35, Wandplatte 37 und Entriegelungseinrichtung 27 bestehende Verschiebeeinrichtung 41 weist an einer geometrisch geeigneten Stelle eine Fahne 42 auf, welche mit der Verschiebebewegung ebenfalls in Richtung 38 verfahren werden kann. Auf dieser Fahrstrecke der Fahne 42 sind an bestimmten Stellen Lichtschranken 43a bis 43e angeordnet. Jede dieser Lichtschranken ist an einem Ort angebracht, für welchen es ein konkretes Maß einer Kassettenlänge gibt. Das heißt, daß die Fahne 42 beispielsweise in der Lichtschranke 43c einen konkreten Wert einer bekannten Kassettenlänge (zu der es mehrere Breiten geben kann) repräsentiert.

Wenn im vorangegangenen die Erkennung der Kassettenlänge bzw. die X-Erkennung erläutert worden ist, soll im folgenden die Y-Erkennung bzw. die Erkennung der Kassettenbreite beschrieben werden. Mit der an sich feststehenden und nur verschwenkbaren Platte 34 steht eine Abtasteinheit 44 in Wirkverbindung, welche im wesentlichen aus einer horizontal angeordneten Platte mit einem vertikal nach unten abgebogenen Meßhaken 45 besteht. Durch nicht dargestellte Mittel ist die Abtasteinheit 44 relativ nur Platte 34 in Einschubrichtung 46 einer Kassette verschiebbar und außerdem durch ebenfalls nicht dargestellte Mittel um eine parallel zur Schaltwalze 16 verlaufende Achse 47 um einen kleinen Winkel schwenkbar angeordnet. An der Abtasteinheit 44 ist ebenfalls eine Fahne 48 angeordnet, welche auf dem Verschiebeweg der Abtasteinheit 44 in Richtung 46 eine Reihe von an der Platte 34 angeordneten Lichtschranken 49a bis 49d durchfahren kann.

Auf der Abtasteinheit 44 ist ferner eine Filmabtastung 50 vorgesehen, welche einen drehbar gelagerten Hebel 5 aufweist, der mit einem Ende 52 eine Lichtschranke 53 durchfahren kann und an seinem anderen Ende eine Spitze 54 aufweist, welche aufgrund einer nicht dargestellten Feder gegen den Uhrzeigersinn bewegt wird.

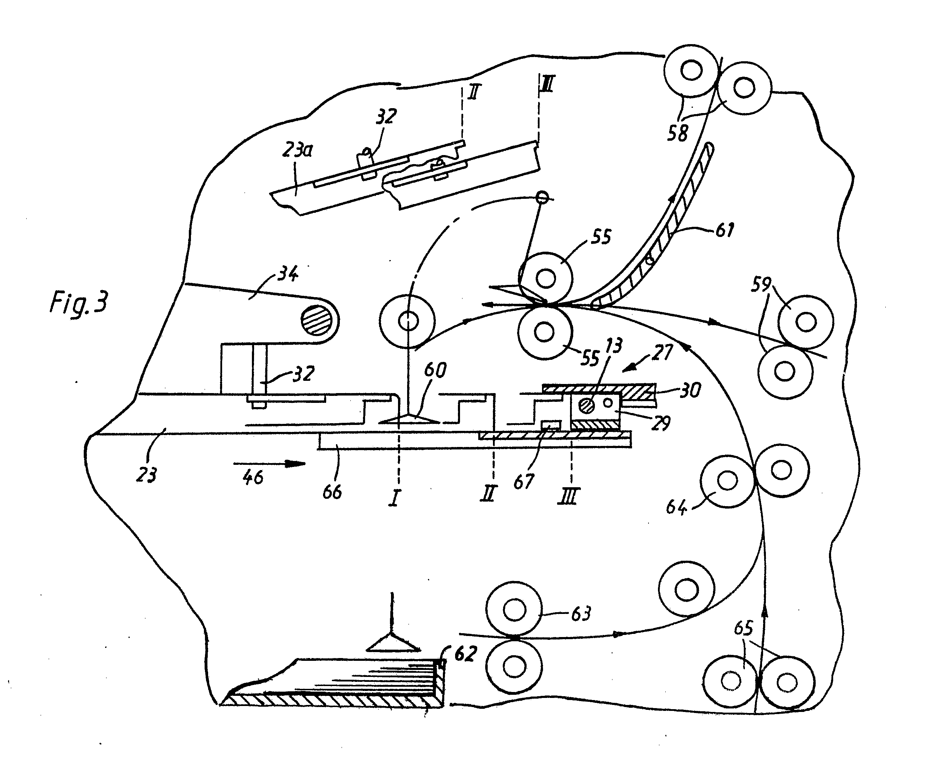

Parallel zur Stange 13 ist außrhalb des Schachtes 16 ein Transportwalzenpaar 55 angeordnet, dessen Aufgabe in Fig. 3 noch näher beschrieben wird.

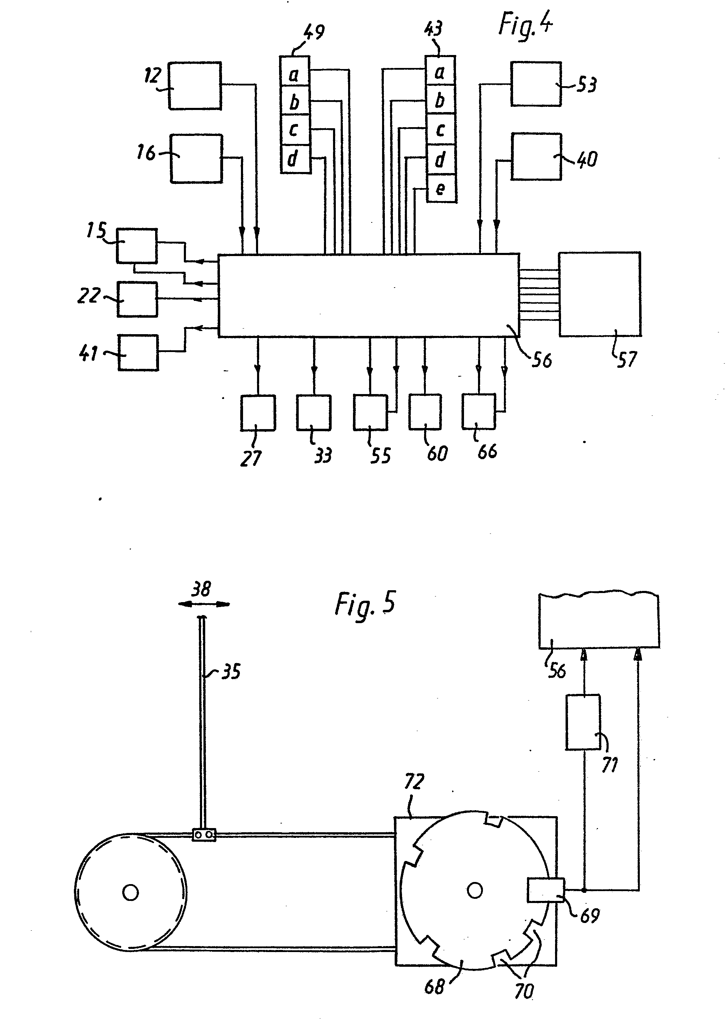

Anhand von Fig. 4 soll nun die Wirkungsweise der in Fig. 2 beschriebenen Anordnung erläutert werden. Wenn eine Kassette 23 durch die Öffnung 4 in den Eingabeschacht 6 eingeführt wird, wird zunächst die Schaltwalze 16 betätigt. Mit ihrer Betätigung wird der nicht dargestellte Antrieb für die Transportwalzen 15 angeschaltet, welche sich daraufhin in der Richtung drehen, daß die Kassette in Richtung zur Stange 13 gefördert wird. Sobald der Schalter 12 betätigt wird, wird der Antrieb für die Transportwalzen 15 wieder abgeschaltet. Ist jedoch die Schaltwalze 16 noch betätigt, so bedeutet das, daß eine Kassette oder ein Stück in den Schacht 6 eingeführt worden ist, das zu groß ist und demnach kein bekanntes Format darstellt. Diese Verknüpfung zwischen den einzelnen Abtast- und Fühlerelementen wird in einem Rechner 56 hergestellt und überprüft. Wenn also Schalter 12 und 16 betätigt sind, wird über den Rechner die Antriebsrichtung der Transportwalzen 15 umgedreht und die Kassette wieder aus dem Schacht 6 ausgestoßen. Ist dagegen nur noch der Schalter 12 betätigt, so wird der Antrieb der Walzen 15 abgeschaltet, die Lichtklappe 22 geschlossen und der nicht dargestellte Antrieb für die Verschiebeeinrichtung 41 in Gang gesetzt. Mit der Bewegung der Verschiebewand 35 in Richtung 38 wird die Kassette an die Wand 34 gefördert und liegt dort unterhalb der Lichtschrankenzeile 49 an dieser an. In der Endstellung der Verschiebeplatte 35 gibt es nun zwei Möglichkeiten, entweder befindet sich die Fahne 42 in einer der Lichtschranken 43 oder nicht. Im letzten Fall entscheidet der Rechner 56 « falsches Format » und schaltet die Elemente 41, 22, 15 in der angegebenen Reihenfolge und mit umgekehrter Antriebsrichtung wieder ein, vomit die Kassette ausgegeben wird. Befindet sich jedoch die Fahne 42 in einer der Lichtschranken 43, so wird dieser X-Wert mit den in einem Speicher 57 gespeicherten Werten verglichen.

Mit der Schiebebewegung der Verschiebeplatte 35 wird auch der Taststift 39 an die Kassette geführt. Kann dieser in die vorgesehene Ausnehmung der Kassette eingreifen, so ist die korrekte Lage der Kassette mit Deckel nach oben und vorne bestätigt und die Messung läuft in der oben genannten Weise ab. Liegt die Kassette jedoch verkehrt herum, so wird der Taststift nach außen gedrückt und betätigt den Schalter 40. Im Rechner wird damit wieder der oben beschriebene Vorgang der Kassettenausgabe ausgelöst.

In unmittelbarer Folge mit der Verschiebebewegung der Einheit 41 wird auch die Abtasteinheit 44 in Gang gesetzt. Zunächst schwenkt diese um die Achse 47 gegen den Uhrzeigersinn, so daß der Haken 45 in den Einfahrbereich der Kassette geschwenkt ist. Sodann wird die Antriebseinheit 44 in Richtung 46 von hinten her auf die Kassette gefahren, bis der Haken 45 an der Rückseite der Kassette zum Anliegen kommt. Damit ist die Kassettenbreite erfaßt. Befindet sich die mit der Abtasteinheit verbundene Fahne 48 in einer Lichtschranke 49, so wird auf mögliches Format erkannt und in den Speicher 57 eingegeben. Steht die Fahne 48 zwischen den Lichtschranken, so wird auf « falsches Format » erkannt und die Kassette wie beschrieben wieder ausgegeben.

Im Speicher 57 werden die erkannten X- und Y-Werte mit den gespeicherten Formatwerten verglichen und festgestellt, ob das sich mit diesen Werten ergebende Format existiert. Nachdem die in Rede stehende Vorrichtung für eine Vielzahl von Kassetten und Filmformaten geeignet ist, in den Vorratsmagazinen jedoch nur fünf oder sechs Filmgrößen gespeichert werden können, wird in dem Rechner 56 außerdem überprüft, ob das abgetastete Format überhaupt in den Vorratsmagazinen zum Zwecke einer Neubeladung vorhanden ist. Ist dies nicht der Fall, so wird die Kassette nicht ohne weiteres ausgegeben, sondern zunächst der Bedienungsperson das Fehlen des benötigten Filmes angezeigt. Es kann nämlich sein, daß sich in der Kassette ein Film befindet, der lediglich entnommen werden soll. In diesem Fall kann die Bedienungsperson eine Taste am Eingabepult drücken, die das Entladen der Kassette alleine auslöst.

In gleicher Weise kann die Filmanzeige, welche mit der Spitze 54 den Beladungszustand einer Kassette abtasten kann, anzeigen, ob sich ein Film in der Kassette befindet. Ist dies nicht der Fall, so wird auch dieser Zustand der Bedienungsperson angezeigt, so daß diese eine Taste drücken kann, daß die Kassette lediglich beladen werden soll.

Unabhängig von diesen Sonderfällen wird nun der normale Vorgang nach Erkennen der richtigen Kassettengröße fortgeführt, indem zunächst die Entriegelungseinrichtung 27 ausgelöst wird. In der beschriebenen Weise wird dabei zunächst die Wippe 30 auf die Handhabe der Kassette gedrückt und sodann durch nicht dargestellte Mittel die Einrichtung zur Mitte der Stange 13 hin verschoben. Damit ist die Kassette entriegelt. Die Wippen bleiben in dieser Stellung und halten den Kassettenboden am Geräteboden damit fest. Nun wird die Achse 33 gedreht, womit die Platten 34 und 35 verschwenkt werden und die Haken 32 den Kassettendeckel anheben. Nach dem Be- und Entladen der Kassette wird diese in umgekehrter Weise wieder verschlossen und der Vorgang der Kassettenausgabe wie oben erwähnt ausgelöst.

In Fig. 3 ist in vergrößertem Maßstab das Entladen und Beladen der Kassette näher beschrieben. Dabei sind von der Kassette Boden und Deckel nur zum Teil dargestellt. wobei der Schnitt durch eine Wippe 30 gelegt ist. In Fig. 3 ist auf der linken Seite das Vorderteil einer geschlossenen Kassette 23 gezeigt, deren Stirnseite an dem nicht dargestellten Schalter 12 in einer Stellung I anliegt. In dieser Stellung wird die Formaterkennung durchgeführt. Sobald dieser Vorgang abgeschlossen ist, wird das Entriegeln durch die Wippen 30 bewirkt und der Kassettendeckel 23 a durch die Haken 32 angehoben. Dieses Anheben wird dadurch unterstützt, daß die Kassette in Pfeilrichtung 46 auf das Be- und Entnahmewalzenpaar 55 zufährt. Zu diesem Zweck wird mittels eines Antriebs 66 die zwischen den Platten 34 und 35 gehaltene Kassette zusammen mit den Wandplatte 36 und 37 sowie dem gesamten auf der Stange 13 angeordneten Mechanismus in dieser Richtung relativ zu den Walzen 55 verschoben. Damit wird die Stellung II erreicht. In dieser Stellung befindet sich der Deckel 23a in der ebenfalls mit II gekennzeichneten Stellung und eine Saugeinrichtung 60 greift in die Kassette 23 ein und entnimmt in an sich bekannter Weise das darin befindliche Filmblatt. Die Saugeinrichtung 60 übergibt dieses Blatt dem Transportwalzenpaar 55, das in einer ersten Richtung angetrieben ist und das Blatt je nach Stellung einer Weiche 61entweder an ein zu einem Speicher führendes Walzenpaar 58 (gezeigte Darstellung) oder direkt an ein zu einer Entwicklungsmaschine führenden Walzenpaar 59 übergibt. Aufgrund des im Rechner 56 festgehaltenen Formats wird nun aus dem entsprechenden Vorratsmagazin 62 ein neues Blatt abgefaßt un den Transportwalzenpaaren 63 und 64 übergeben.

Nachdem das belichtete Filmblatt aus der Kassette entnommen worden ist und das Walzenpaar 55 umgekehrt und die Kassette 23 mit den Seitenwänden und der Stange 13 in die Stellung III durch den Antrieb 66 verschoben. In Stellung III ist dabei gezeigt, daß die Wippe 30 immer noch auf den Kassettenboden drückt und die Kassette somit festhält. In dieser Position wird nun das aus dem Vorratsmagazin 62 abgefaßte neue Blatt in die Kassette eingegeben. Dabei wird der Vorderrand des Blattes am Kassettenboden bis an die Scharnierseite bewegt und das hintere Blattende fällt von der unteren Transportwalze 55 in den Innenraum der Kassette ein.

Mit dem Walzenpaar 65 wird angedeutet, daß das neue Filmblatt auch aus einem anderen Vorratsmagazin kommen kann.

Mit den unterschiedlichen Stellungen der Kassette wird erreicht, daß in der Stellung II die Saugeinrichtung verhältnismäßig leicht in die Kassette eingeführt werden kann, was in der Stellung III problematisch wäre. In der Stellung III wird erreicht, daß das Filmblatt genau in die Kassette fällt. In Stellung II bestünde die Gefahr, daß das Blatt über den Kassettenrand heraus hängenbliebe.

Nach der Eingabe des Filmes wird die Richtung des Antriebs 66 umgekehrt, so daß die Kassette von Stellung III in Stellung I gefahren wird, in welcher das Verschließen des Deckels 23a erfolgt.

Bei einer Abwandlung der Erfindung kann statt der Zeilen von Lichtschranken 43 und 49 auch jeweils eine Scheibe 68 vorgesehen werden, die mit einem Antrieb 72 in Verbindung stehenden Bandtrieb fest verbunden ist. Auf der Scheibe 68 sind in festgelegten Abständen Marken 70 angebracht, welche von einer Lichtschranke 69 abgetastet werden können. Die Lichtschranke 69 steht mit einem Zähler in Verbindung, dessen Ausgang zum Rechner 56 führt.

Im Betrieb zählt der Zähler 71 die durchlaufenen Marken 70 in der Lichtschranke 69 und außerdem ist die Lichtschranke 69 direkt mit dem Rechner 56 verbunden, um die Stellung einer Marke 70 innerhalb der Lichtschranke 69 bei Beendigung der Bewegung der Verschiebeplatte 35 feststellen zu können. Damit lassen sich in gleicher Weise wie oben beschrieben konkrete Stellungen der Abtastorgane erkennen. Selbstverständlich kann in der gleichen Weise die Abtasteinheit 44 ausgebildet sein.

## Patentansprüche

1. Vorrichtung zum Be- und Entladen von Röntgenfilmkassetten, mit einem Schacht zur Aufnahme einer Kassette, Transportelementen zum Ein- und Ausfahren der Kassette, mit Mitteln zum lichtdichten Verschließen der Eingabeöffnung des Schachtes, einer Öffnungseinrichtung für die Kassette, Mitteln zur Filmentnahme aus der und zum Eingeben eines Filmes in die Kassette, und mit einer auch als Abtasteinrichtung für die Kassettenlänge dienenden transversalen Verschiebeeinrichtung zum Positionieren der Kassette und mit einer die Kassettenbreite abtastenden Abtasteinrichtung, durch die die Ist-Werte der Kassettenlänge und -breite feststellbar sind, wobei die mechanisch abtastenden Abtasteinrichtungen mit je einer Anzahl von elektrischen Schaltelementen zusammenwirken, dadurch gekennzeichnet, daß eine elektronische Vergleichseinrichtung, in der die abgetasteten Werte mit zu bestimmten Kassetten- bzw. Filmformaten gehörenden Längen- und Breitenwerten verglichen werden, vorgesehen ist und die Vergleichseinrichtung einen Rechner (56) aufweist, der mit einem die bestimmten Formate enthaltenden Speicher (57) in Verbindung steht, daß der Rechner (56) bei im Speicher (57) nicht enthaltenen Formatwerten ein Signal « falsches Format » erstellt, und daß die Verschiebeeinrichtung (41), die Mittel zum lichtdichten Verschließen der Eingabeöffnung (22) und die Transportelemente (15) für die Kassette (23) aufgrund des Signals « falsches Format » für eine Kassettenausgabe in umgekehrter Richtung antreibbar sind.

2. Vorrichtung nach Anspruch 1, dadurch gekennzeichnet, daß die elektrischen Schaltelemente durch Zeilen von Lichtschranken (43a bis 43c ; 49a bis 49d) gebildet sind.

3. Vorrichtung nach den Ansprüchen 1 und 2, dadurch gekennzeichnet, daß die Abtasteinrichtung für die Kassettenlänge durch eine in Einführrichtung (46) der Kassette verschiebbare Abtasteinrichtung (44) mit einem Fühlhaken (45) gebildet ist und jede Abtasteinrichtung (41, 44) mit einer zwischen den jeweiligen Lichtschrankenzeilen hindurchführbaren Fahne (42, 48) verbunden ist.

4. Vorrichtung nach einem der Ansprüche 1 bis 3, gekennzeichnet durch einen eine an einer bestimmten Stelle der Kassette (23) ausgeformte Ausnehmung (67) erfühlenden Taster (39, 40), durch den bei fehlender Ausnehmung ein Schaltvorgang im Rechner (56) und die Kassettenausgabe auslösbar sind.

5. Vorrichtung nach einem der Ansprüche 1 bis 4, gekennzeichnet durch eine eine Markierung für den Beladungszustand der Kassette abtastende Fühlereinrichtung (50), die bei dem Zustand « kein Film » ein Signal an den Rechner (56) gibt, der ein Warn- und/oder ein Stoppsignal an die Vorrichtung liefert.

6. Vorrichtung nach Anspruch 1, und/oder einem der Ansprüche 3 bis 5, dadurch gekennzeichnet, daß die Antriebe (72) der Abtastorgane (35 ; 44) mit jeweils einer Kennzeichnungsscheibe (68) in Verbindung stehen, eine Lichtschranke (69) für die eine bestimmte Formatstellung der Abtastorgane kennzeichnenden Marken (70) vorgesehen ist und zwischen Lichtschranke (69) und Rechner (56) ein Zähler (71) zum Zählen der durchlaufenden Marken (70) dazwischengeschaltet ist.

## Claims

1. Device for loading and unloading X-ray film cassettes, having a cavity for receiving a cassette, transporting elements for inserting and discharging the cassette, having means for sealing the feed opening of the cavity in a light-excluding manner, a device for opening the cassette, means for removing a film from and inserting a film into the cassette, and having a transverse displacing device, which also serves as a device for sensing the cassette length, for positioning the cassette, and having a sensing device which senses the width of the cassette, by means of which the actual values of the cassette length and width can be determined, the mechanically sensing sensing devices each acting in conjunction with a number of electrical switching elements, characterised in that an electronic comparing device, in which the sensed values are compared with length and width values belonging to specific cassette and film sizes, is provided and the comparing device has a computer (56) which is connected to a store (57) which contains the specific sizes, in that the computer (56) generates the signal « wrong size » in the case of size values not contained in the store (57), and in that the displacement device (41), the means for sealing the feed opening (22) in a light-excluding manner and the transporting elements (15) for the cassette (23) can be driven in the reverse direction for discharging the cassette, in response to the signal « wrong size ».

2. Device according to Claim 1, characterised in that the electrical switching elements are formed by rows of light barriers (43a to 43c ; 49a to 49d).

3. Device according to Claims 1 and 2, characterised in that the sensing device for the cassette length is formed by a sensing device (44) which has a feeler catch (45) and can be displaced in the direction (46) of the insertion of the cassette and each sensing device (41, 44) is connected to a flag (42, 48) which can be passed between the respective rows of light barriers.

4. Device according to one of Claims 1 to 3, characterised by a feeler (39, 40) which feels an indentation (67) formed at a particular point on the cassette (23), by means of which feeler a switching process in the computer (56) and the discharge of the cassette can be triggered off if the indentation is not present.

5. Device according to one of Claims 1 to 4, characterised by a feeler device (50) which feels a mark for the loading state of the cassette and which, in the case of the state « no film », gives a signal to the computer (56) which provides a warning and/or a stop signal to the device.

6. Device according to Claim 1 and/or one of Claims 3 to 5, characterised in that the drives (72) for the sensing elements (35 ; 44) are each connected to an indicating disc (68), a light barrier (69) is provided for the marks (70) indicating a particular size positioning of the sensing elements and a counter (71) for counting the passing marks (70) is arranged between the light barrier (69) and the computer (56).

## Revendications

1. Dispositif pour le chargement et le déchargement de cassettes de films radiographiques, avec une cuve pour le logement d'une cassette, des éléments d'entraînement pour l'introduction et la sortie de la cassette, avec des moyens pour l'obturation opaque de l'ouverture d'entrée de la cuve, un mécanisme pour l'ouverture de la cassette, des moyens pour prélever ou introduire un film dans la cassette, avec un mécanisme de déplacement transversal pour le postionnement de la cassette servant également de mécanisme de balayage en longueur de la cassette et avec un mécanisme de balayage en largeur de la cassette, au moyen desquels sont décelables les valeurs réelles en longueur et en largeur sur la cassette, en même temps que les mécanismes de balayage mécanique agissent simultanément avec un certain nombre de composants électriques, caractérisé par le fait qu'un mécanisme de comparaison électronique, dans lequel les valeurs balayées sont comparées avec les valeurs en longueur et en largeur appartenant aux formats déterminés de cassettes et de films, est prévu, lequel comporte un calculateur (56), qui est relié à une mémolire (57) contenant les formats déterminés, par le fait que le calculateur (56) émet en cas de valeurs de format non contenues dans la mémoire (57) un signal « faux format » et par le fait que le mécanisme de déplacement (41), les moyens pour l'obturation opaque de l'ouverture d'introduction (22) et les éléments d'entraînement (15) de la cassette (23) sont commandables en sens inverse pour une sortie de cassette en raison du signal « faux format ».

2. Dispositif selon la revendication 1, caractérisé par le fait que les composants électriques sont formés par des rangées de barrages photoélectriques (43a à 43c ; 49a à 49d).

3. Dispositif selon les revendications 1 et 2, caractérisé par le fait que le mécanisme de balayage en longueur de la cassette est constitué par un mécanisme de balayage (44), déplaçable dans la direction d'introduction (46) de la cassette, équipé d'un tenon sondeur (45) et chaque mécanisme de balayage (41, 44) est relié à une palette (42, 48) qui peut être introduite entre les rangées respectives de barrages photoélectriques.

4. Dispositif selon l'une des revendications 1 à 3, caractérisé par un palpeur (39, 40) détectant un évidement (67) façonné à un emplacement déterminé de la cassette (23), palpeur par l'intermédiaire duquel, en l'absence d'évidement, sont déclenchables un processus de commutation dans le calculateur (56) et la sortie de la cassette.

5. Dispositif selon l'une des revendications 1 à 4, caractérisé par un mécanisme capteur (50), balayant un repère pour l'état de chargement de la cassette et qui, en cas d'état « pas de film », émet un signal vers le calculateur (56), qui fournit un signal d'avertissement et/ou d'arrêt au dispositif.

6. Dispositif selon la revendication 1 et/ou l'une des revendications 3 à 5, caractérisé par le fait que les entraînements (72) de l'organe de balayage (35 ; 44) sont reliés chacun à un disque d'identification (68), un barrage photoélectrique (69) est prévu pour les repères (70) caractéristiques d'une position de format déterminée de l'organe de balayage, et entre le barrage photoélectrique (69) et le calculateur (56) est intercalé un compteur (71) pour le comptage des repères (70) qui passent.

Fig.1

0 104 419

Fig.2

0 104 419

*Fig.3*

0 104 419

Fig. 4

Fig. 5